# EUROPEAN PATENT APPLICATION

(11) **EP 2 284 465 A2**
(43) Date of publication of application: **16.02.2011**
(21) Application number: 10170193.6
(22) Date of filing: 20.07.2010
(51) Int. Cl.: F25D 23/12, F25D 17/06, F25D 23/04

(54) **System for making ice-cream, for domestic use in particular**

(30) Priority: 30.07.2009 IT BS20090141
(71) Applicant: Willcox Investments S.A., Avenue de la Faïencerie, 38 1510 Luxembourg (LU)
(72) Inventor: Faedo, Andrea, I-25121, Brescia (IT); Ferretti, Giorgio, I-25121, Brescia (IT)
(74) Representative: Pulieri, Gianluca Antonio

(57) **Abstract**

A system (1) for making ice-cream comprises a refrigerator device (2) having a container compartment (10), for example in a door, a cold intake (30), an ice-cream maker (40), at least partially housed in the container compartment (10). Said mixing devices (44, 46) of the ice-cream maker (40) are electrically driven and the recipient (42) is connected to the cold intake (30) to cool the inner compartment of the recipient (42).

## Description

The present invention relates to a system for making ice-cream, for domestic use in particular.

In recent years a considerable increase in the consumption of ice-cream has been observed, especially handmade ice-cream which for consumers has an added value given the natural ingredients used.

Nowadays the question of the genuine nature of ingredients and their traceability is particularly felt and in the ice-cream sector too, devices for making ice-cream at home are becoming increasingly widespread.

In fact home-made ice-cream makes it possible to ensure the genuineness of the ingredients, make the desired flavours and use chosen ingredients for consumers suffering from food intolerances or allergies.

As of today two types of devices are available for making ice cream at home.

The first type consists of passive devices, that are provided with a container which, before making the ice-cream must be placed in the fridge or freezer to reach the desired temperature. Subsequently the ingredients (mainly milk and flavourings) are poured into the container and mixed with a spatula or spoon, sometimes motorised, to make the ice-cream.

Such devices have the considerable drawback of requiring prior cooling of the container; as a result someone wishing to make ice-cream must first place the container in the fridge and only later can they start making the ice-cream.

The second type consists of active devices, which provide a container cooled by suitable cooling means. To make the ice-cream the ingredients are poured into the container and the rotating blade is started.

As with most electric kitchen appliances, the devices for making ice-cream belonging to the second type have the drawback of costing considerably more than the former and of taking up an often unacceptable amount of room on the kitchen counter.

The purpose of the present invention is to invent a system for making ice-cream, for domestic use particular, which overcomes the drawbacks spoken of and satisfies the aforesaid requirements.

Such purpose is achieved by a system made according to claim 1 below. The dependent claims describe embodiment variations.

The characteristics and advantages of the system according to the present invention will be evident from the description below, made by way of a non-limiting example, according to the following figures, wherein:

- figure 1 shows a system for making ice-cream according to the present invention, according to one embodiment;

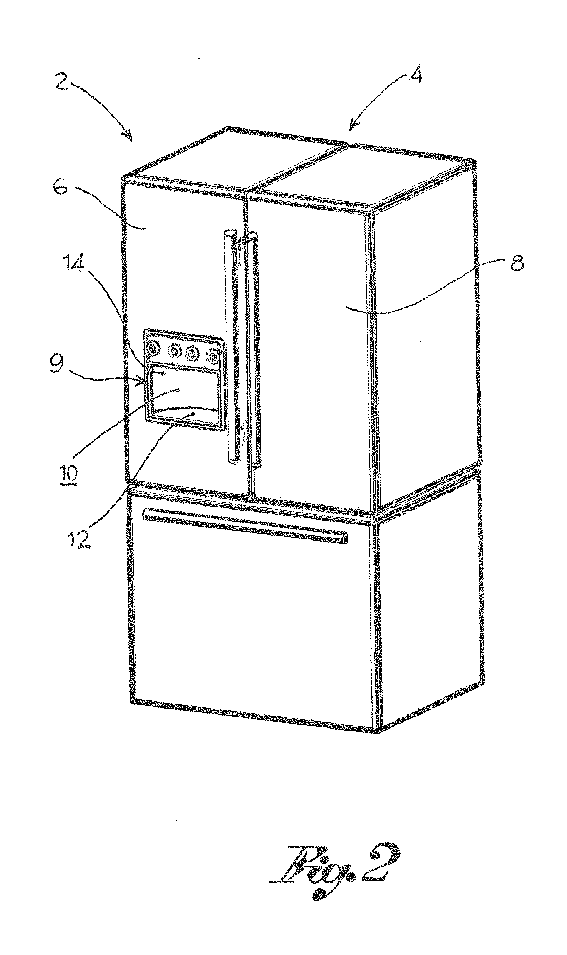

- figure 2 shows an example of a refrigerator device of the system in figure 1, according to one embodiment;

- figure 3 shows a functioning diagram of the system according to the present invention, according to one embodiment;

- figure 4 shows a functioning diagram of the system according to the present invention, according to a further embodiment;

- figure 5 shows a functioning diagram of the system according to the present invention, according to yet a further embodiment;

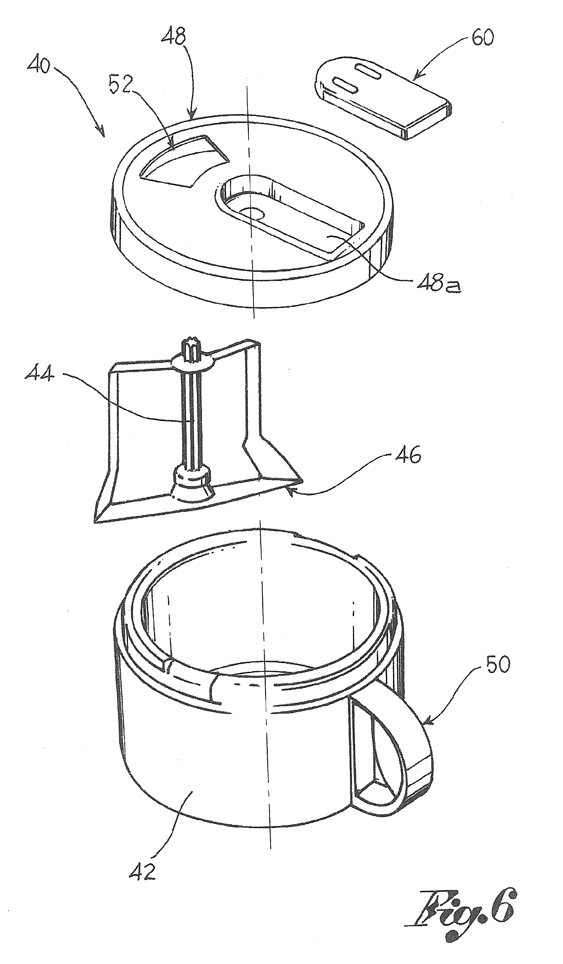

- figure 6 shows a device for making ice-cream of the system according to the present invention, according to one embodiment; and

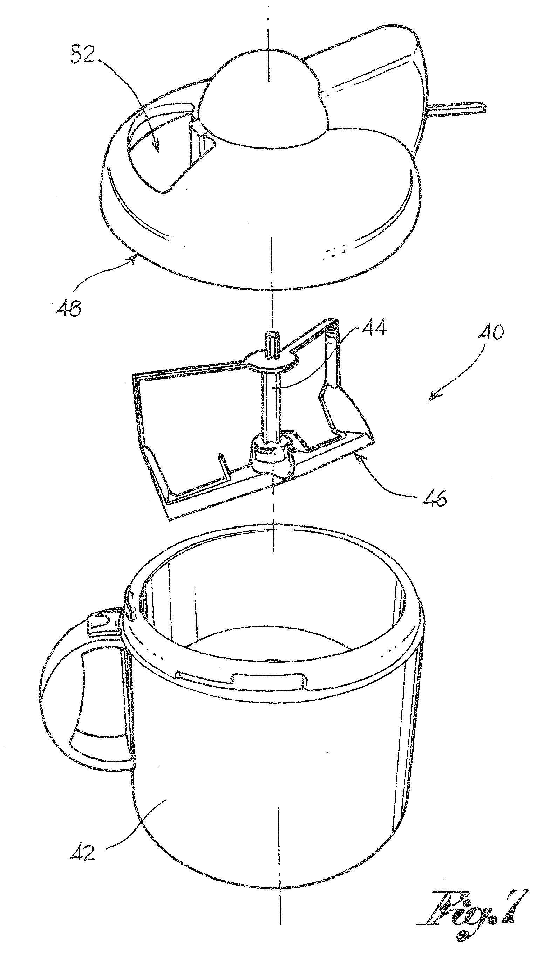

- figure 7 shows a device for making ice-cream of the system according to the present invention, according to a further embodiment.

In the drawings hereto attached reference numeral 1 globally denotes a system for making ice-cream, in particular for domestic use.

The system 1 comprises a refrigerator device 2, such as a fridge, comprising a body 4 and at least one door 6, connected to the body 4 which can be opened to access the refrigerated compartment inside the body 4.

For example, the refrigerator device 2 comprises two doors 6, 8 hinged to the body 4 along their vertical edges, so that they can rotate to allow opening or closing of the inner refrigerated compartment.

The system 1 comprises first chiller devices electrically powered and able to chill the inner compartment.

The refrigerator device 2 comprises an ice-maker 9 able to make ice-cubes and to dispense them outside the body and preferably able to dispense cold water outside the body 4.

In particular, the refrigerator device 2 has a container compartment 10, made outside one of said doors 6, 8 as a recess in the surface.

The container compartment 10 therefore has a substantially horizontal base 12, a lateral wall 14, jutting vertically from the base 12, and a top cover 16, which vertically overhangs the base.

Apertures 18a are preferably provided at the point of the top cover for the ice maker to dispense ice cubes 18a and/or cold water 18b.

Inside the door 6, 8, above the top cover of the container compartment 10, ice cube making devices are positioned, able to form the cubes of ice or to chill the water and convey them towards the apertures 18a, 18b in the top cover of the container compartment.

Furthermore, the refrigerator device comprises a cold intake 30 able to dispense cold air, that is an intake from which a flow of chilled air comes out.

In particular, the refrigerator device comprises second chiller devices capable of cooling, for example able to dispense cold air, connected to the cold intake 30.

Preferably, the second chiller devices are part of the ice-making device and therefore also suitable for making ice cubes and for chilling water.

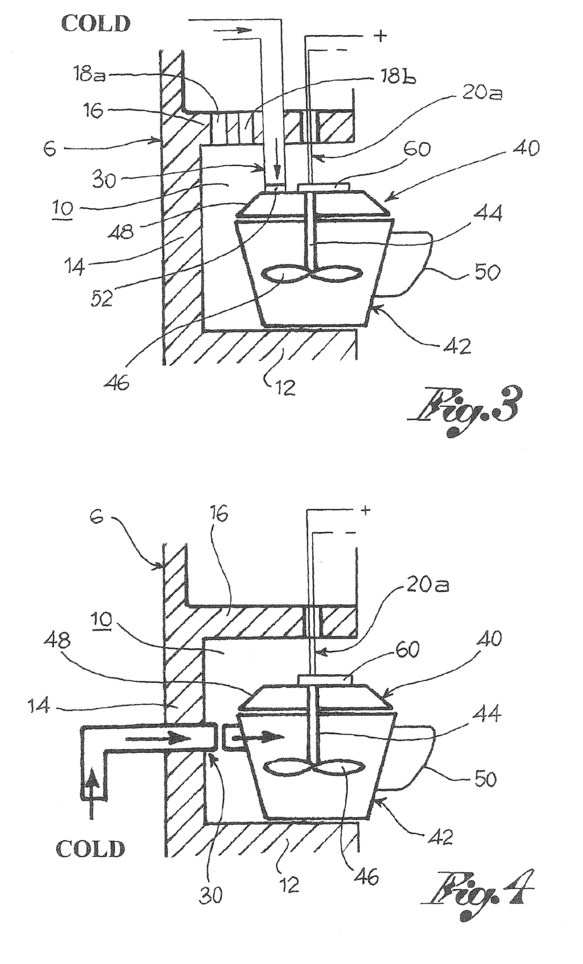

Preferably, the cold intake 30 is positioned on the top cover 16 of the container compartment 10 (figure 3).

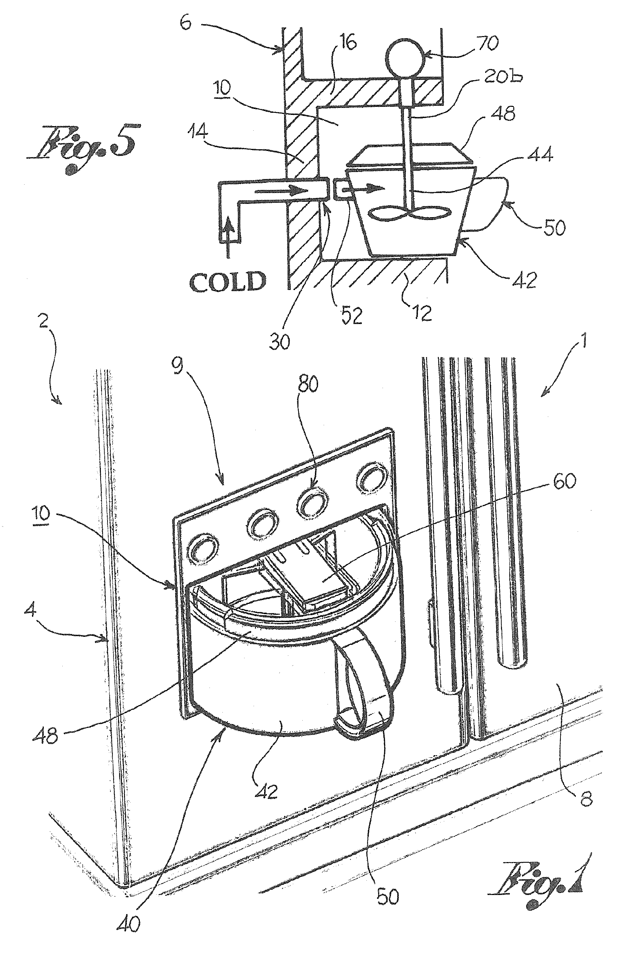

According to a further variation, the cold intake is positioned on the lateral wall 14 of the container compartment 10 (figures 4 and 5).

The system 1 further comprises an ice-cream maker 40, lodged at least partially in the container compartment 10, comprising a recipient 42 and mixing devices for making the ice-cream in the recipient. The recipient 42 rests at least partially on the base 12 of the container compartment 10.

Preferably, the mixing devices comprise a mixer shaft 44, inside the recipient 42, and mixer blades 46 for making the ice-cream.

Preferably, the ice-cream maker 40 further comprises a handle 50, projecting from the recipient 42, to extract it from the container compartment 10.

Preferably, the ice-cream maker 40 further comprises a lid 48 which can be coupled to the recipient 42.

For example, the lid 48 is transparent to enable the user to see inside the recipient 42; according to a further example, the lid 48 has a window, positioned in the part of the lid projecting from the container compartment 10, to inspect the inside of the recipient 42.

The ice-cream maker 40 further comprises a mouth for the cold 52 coming into the recipient 42, for example through the lid or through the lateral wall of the recipient, suitable for being joined to the cold intake 30, to chill the compartment inside the recipient 42.

According to a preferred embodiment, the recipient has a main inner compartment and a cooling chamber which surrounds the main compartment, separate from it.

Preferably, part of the flow of cold air is fed to the main compartment, so that it comes into direct contact with the liquid for making the ice-cream, and part is fed to the cooling chamber, so as to keep the main compartment cold.

Preferably, furthermore, return ducts connected to the main inner compartment and/or cooling chamber are also provided for the flow of air to return from the recipient towards the second chiller devices and/or towards the ice-maker.

According to a preferred embodiment, the refrigerator device comprises an electric voltage socket 20a, positioned in the container compartment 10 of the hatch 6.

For example, the electric voltage socket 20a is positioned in the top cover 16 of the container compartment 10.

According to such embodiment of the system 1, the ice-cream maker 40 comprises an electric motor 60 connectable for the electric power supply to the electric socket 20a and mechanically connected to the mixing devices to operate them.

Preferably, the electric motor 60 is lodged in a compartment 48a of the lid 48 of the ice-cream maker 40.

According to a further embodiment, the refrigerator device comprises a mechanical torque socket 20b, positioned in the container compartment 10 of the door 10. For example, a mechanical torque socket is foreseen.

Preferably, the torque socket is connected to an electric motor 70, lodged in the door 6, for example above the top cover 16 of the compartment 10.

For example, the torque socket 20b, is positioned in the top cover 16 of the container compartment 10.

According to further embodiment variations, the torque socket is positioned on the lateral wall 14 of the container compartment 10 that is on the base 12 of said compartment 10.

According to such embodiment of the system 1, the ice-cream maker 40 is designed so that the mixing devices can be connected in a releasable manner to the mechanical torque socket 20b.

Preferably the system 1 further comprises control devices 80, for example positioned near the container compartment 10, for example beside the edges of it, able to control the functioning of the ice-cream maker 40, for example able to control the rotation of the blades and/or the despatch of cold air through the cold intake 30.

Innovatively, the ice-cream making system according to the present invention prevents cluttering up of kitchen counters and enables ice-cream to be made rapidly, overcoming the drawbacks of the prior art.

Advantageously, the system according to the present invention further avoids having to appropriately position foods in the inner freezer compartment of the fridge or in the freezer to be able to adequately use the ice-cream maker. In fact, according to the invention, this is housed in a container compartment outside the body of the fridge, for example on a door.

Advantageously, furthermore, the refrigerator devices usually present in a fridge are used, for example, those of the ice maker.

Advantageously, in addition, the recipient is easy to extract and is washable.

According to a further advantageous aspect, the action of the flow of chilled air is used, thereby enabling ice-cream to be made efficiently and rapidly.

It is clear that a person skilled in the art may make modifications to the system for making ice-cream described above.

For example, according to one embodiment, a single electric motor is provided to power all the equipment.

According to a further embodiment example, single chiller devices are provided, used for the compartment inside the fridge and for the ice-cream maker.

All the variations are to be considered as falling within the sphere of protection as defined by the following claims.

## Claims

1. System (1) for making ice-cream, comprising:
- a refrigerator device (2), comprising an inner refrigerator compartment for the storage of foodstuffs, having an external container compartment (10);
- a cold intake (30) situated in the container compartment (10) and chiller devices able to supply cold from said cold intake;
- an ice-cream maker (40), at least partially lodged in the container compartment (10) of the refrigerator device (2), comprising a recipient (42) and mixing devices to make the ice-cream in the recipient;
wherein said mixing devices (44, 46) can be activated electrically, the chiller devices are able to dispense chilled air and the recipient (42) is connected to the cold intake (30) to refrigerate the inner compartment of the recipient (42).

2. System according to claim 1, wherein the refrigerator device (2) comprises a body (4) in which said inner refrigerated compartment is defined, and at least one door (6,8) which can be opened to access said inner refrigerated compartment, wherein the container compartment (10) is made externally on said door.

3. System according to claim 1 or 2, wherein the chiller devices are positioned in the door.

4. System according to any of the previous claims, wherein the container compartment (10) has a horizontal base (12), which the ice-cream maker (40) rests on, a lateral wall (14) jutting vertically from the base and a top cover (16) which overhangs the base, said cold intake (30) being made in said top cover.

5. System according to any of the previous claims, wherein the mixing devices comprise a mixer shaft (44), inside the recipient, and mixer blades (46) connected to it, to make the ice-cream.

6. System according to any of the previous claims, wherein the ice-cream maker (40) comprises a lid able to close the recipient.

7. System according to claim 7, wherein said lid has a window in the portion protruding from the container compartment, for inspection of the inside of the recipient.

8. System according to claim 7, wherein said lid is transparent, for inspection of the inside of the recipient.

9. System according to any of the previous claims, comprising an electric voltage socket (20a) positioned in the container compartment (10) and wherein the ice-cream maker (40) comprises an electric motor, mechanically connected to the mixing devices so as to activate them, which can be connected electrically to the electric plug (20a).

10. System according to claim 9, wherein the electric motor powering the mixing devices is lodged in a compartment of the lid of the recipient (42) of the ice-cream maker (40).

11. System according to any of the previous claims 1-8, comprising a mechanical torque socket (20b) positioned in the container compartment (10) and wherein the mixing devices of the ice-cream maker (40) can be mechanically engaged to the torque socket (20b).

12. System according to claim 11, wherein the torque socket (20b) is connected to an electric motor lodged in a door (6) of the refrigerator device (2).

13. System according to any of the previous claims, wherein the refrigerator device (2) comprises a device for making ice cubes able to dispense the cubes in the container compartment (10) or to dispense cold water into said compartment (10).

14. System according to claim 13, wherein the ice cube device and the cold intake (30) use the same refrigeration devices.

15. System according to any of the previous claims wherein the recipient has a main inner compartment and a cooling chamber which surrounds the main compartment, separate from it, and part of the flow of cold air is fed to the main compartment and part is fed to the cooling chamber.

16. System according to any of the previous claims, wherein return ducts connected to the recipient are provided to return the flow of air from the recipient to the refrigerator devices.
